Europäisches Patentamt

European Patent Office

Office européen des brevets

(19)

(11) **EP 1 281 041 B1**

(12) **EUROPEAN PATENT SPECIFICATION**

(45) Date of publication and mention
of the grant of the patent:
**16.11.2005 Bulletin 2005/46**

(21) Application number: **01917398.8**

(22) Date of filing: **11.04.2001**

(51) Int Cl.⁷: **G01B 11/275**, G06T 1/00

(86) International application number:
**PCT/IB2001/000613**

(87) International publication number:
**WO 2001/077617 (18.10.2001 Gazette 2001/42)**

(54) **MEASURING VEHICLE WHEEL ALIGNMENT WITH VIDEO CAMERAS AND REPEATED APPROXIMATION CALCULATIONS**

MESSUNG DER AUSRICHTUNG VON FAHRZEUGRÄDERN MIT VIDEOKAMERAS UND WIEDERHOLTEN NÄHERUNGSRECHNUNGEN

MESURE D'ALIGNEMENT DES ROUES DE VEHICULES AVEC CAMERAS DE VIDEO ET DES CALCULS D'APPROXIMATION REPETES

(84) Designated Contracting States:
**AT BE CH CY DE DK ES FI FR GB GR IE IT LI LU MC NL PT SE TR**

(30) Priority: **12.04.2000 IT MI000806**

(43) Date of publication of application:
**05.02.2003 Bulletin 2003/06**

(73) Proprietor: **Gieffe Immobiliare S.N.C. di Gianfranco Crosta & C.**
**21100 Varese (IT)**

(72) Inventors:
• **COLOMBO, Flavio**
**I-21013 Gallarate (IT)**
• **RATTI, Alessandro**
**I-20200 Como (IT)**

(74) Representative: **Faggioni, Marco et al**
**Fumero Studio Consulenza Brevetti Snc**
**Pettenkoferstrasse 20-22**
**80336 München (DE)**

(56) References cited:
**EP-A- 0 803 703**          **DE-A- 2 948 573**
**US-A- 5 812 256**

**Description**

The present invention relates to an apparatus for checking the set-up angles of a motor vehicle, at least for measuring the toe-in and camber angles of the associated wheels.

It is known that the set-up angles of a motor vehicle, in particular, as mentioned, the toe-in and camber angles of the wheels, determine not only the wear of the tyres, but also the behaviour of the vehicle itself on the road, both as regards the so-called "road-holding" performance and the travel comfort. The importance of carrying out frequently an accurate check as to the correctness of these set-up angles is therefore obvious.

The toe-in and camber angles of a wheel of a motor vehicle are the angles formed by the wheel axis - or by a plane perpendicular to this axis and passing through the centre of the wheel, conventionally called "wheel plane" - with respect to a reference system fixed to the bodywork of the vehicle itself. More precisely, the toe-in angle is the angle formed by the wheel axis with respect to a vertical plane passing through the centre thereof and perpendicular to the longitudinal axis of the vehicle, or, in an equivalent manner, the angle formed by the wheel plane with respect to a vertical plane passing through the longitudinal axis of the vehicle. The camber angle, on the other hand, is the angle formed by the wheel axis with respect to a horizontal plane passing through the centre thereof or, in an equivalent manner, the angle formed by the wheel plane with respect to a horizontal plane passing through the longitudinal axis of the vehicle.

The most conventional methods for checking these set-up angles are based on measurements determined by detecting instruments applied and fixed to the individual wheels. The main drawbacks of these methods arise precisely from the fact of having to use detecting instruments fixed to the wheels, this resulting, for example, in the problems or drawbacks listed below:

1. Mechanical assembly precision: possible errors during fixing of the instruments result in major measurement errors. Moreover, because of the precision required, whenever measurement must be performed, a significant portion of the testing time is used for this preliminary operation;
2. Stable fixing: the instrument for detecting the measurement point must be fixed very firmly because, otherwise, it may be displaced during measurement and result in further errors;
3. Systematic errors during measurement: in view of the risk that the reference point on wheel may not be chosen in a sufficiently accurate manner, errors in measurement which cannot easily be controlled may arise;
4. Handling of the instruments: the instruments to be fitted must be light, so that they can be easily handled, but at the same time robust to take account of the environment in which they are used.

In order to overcome these problems, more modern methods for measuring the set-up angles have already been proposed, said methods being based on the use of measuring means which are opto-electronic and therefore do not make contact with the wheels of the vehicle or with the vehicle itself. Measuring methods of this type have been proposed, for example, in DE-A-2948573, US-A-4,899,218 and EP-A2-0,895,056.

DE-A-2948573, dating back to 1979, describes the general principles of such a measuring method which, from a conceptual point of view, is relatively simple, i.e. it consists in using videocameras for detecting the profile of the wheels, this profile consisting - due to the fact that the plane of each wheel is not perpendicular to the axis of the videocamera detecting it - of an ellipse. The greater axis and the smaller axis of this ellipse, as well as the point of intersection of these axes, are then determined and from these it is then possible to obtain, mathematically, the orientation of the wheel plane with respect to the longitudinal axis of the vehicle.

This general principle, however, gives rise to major problems regarding practical implementation of the invention, in particular at least the following two main problems:

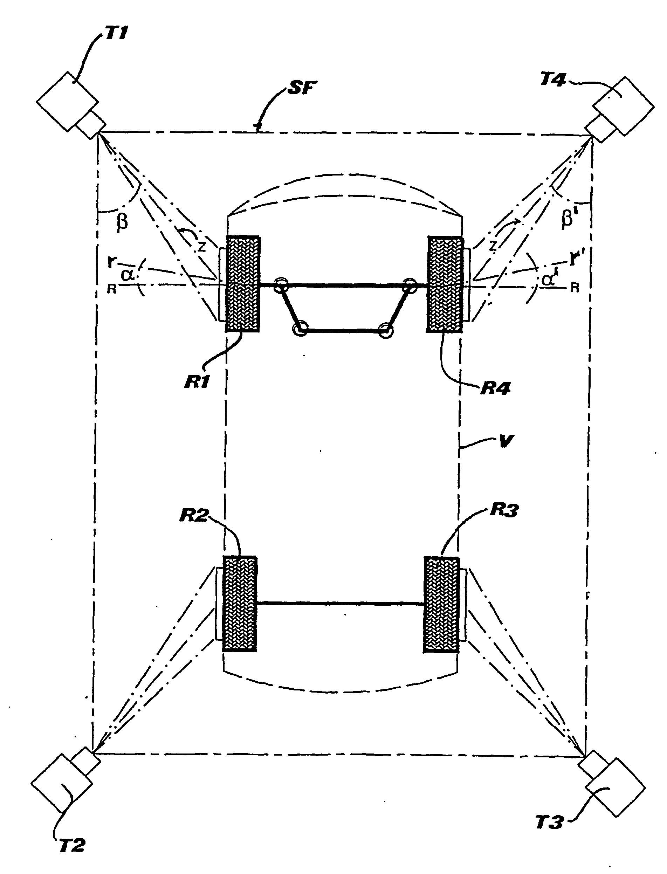

a) Definition of the profile of the ellipse: according to DE-A-29 48 573, an electronic evaluation of the elliptical image of a circle associated with the external diameter of the wheel rim or a circle associated and concentric with the rim is performed. From this elliptical image, which is formed on the sensor layer of the videocamera recording tube, which receives the light, five points (or two points and two tangents, according to the equivalent variant described in the same patent) are chosen, said points determining - as is known in geometry - the mathematical equation of the ellipse. Since in DE-A-29 48 573 no indication as to the manner in which the five points which determine the ellipse is given, it must be considered that the choice thereof is random in nature. The method proposed here, however, is subject to a high degree of imprecision such as to render it unusable in practice: in fact, on the one hand, owing to the inevitable imperfect circularity of the rim, in particular when the rim is no longer new, but worn or damaged by impacts, and on the other hand due to the fact that the image of the rim on the optical receiving layer of the videocamera is not formed by a pure line, but by a bundle of adjacent lines (and here it must be noted that the enlargement of the image proposed according to the variant in Fig. 7 of DE-A-29 48 573 worsens the accuracy of definition of the point instead of improving it), the random choice of five points may result in the calculation of ellipses which are also very different from the theoretical one, and hence major errors in measurement.

b) Definition of the position of the wheel: once the profile of the ellipse, as well as its greater and smaller diameters, have been determined, it is possible to determine mathematically the angular orientation of the plane containing the ellipse with respect to the axis of the videocamera. This angular orientation - in addition to being subject to the major errors in measurement mentioned above - still does not precisely define the plane of the wheel, but instead a bundle of planes which are parallel to each other and only one of which must be taken as a reference for the wheel plane. In order to determine precisely this reference plane and consequently determine the orientation thereof, not with respect to the axis of the videocamera, but instead with respect to the longitudinal axis of the vehicle, DE-A-29 48 573 further proposes using one videocamera for each wheel, displaceable into two different positions, in order to obtain two elliptical images of the same rim. It is obvious, in connection with that stated above, that these two images therefore define the same bundle of parallel planes, but with two different angular orientations compared to the differently positioned axes of a first videocamera and a second videocamera, respectively. Since, together with the elliptical profile, the centre of the ellipse is determined, it is obvious that the reference plane for the position of the wheel will be determined precisely as the plane in which the two centres of the respective ellipses coincide. This procedural method is however subject - doubly so - to the abovementioned drawbacks: on the one hand, because both the elliptical images may produce measurement errors which in this case are accumulated and, on the other hand, because other measurement errors may result from a not perfectly controlled movement of the detecting videocamera.

US-A-4,899,218 describes a measuring process based on the projection of a light beam with an oscillating structure onto the wheel so as to produce at least two reference images thereon; these images are read by video cameras positioned at a certain angle with respect to the optical plane defined by the plane of oscillation of the beam. The spatial position of the lines, and hence the wheel, is calculated by a processor using a known triangulation system.

EP-A2-0,895,056 describes a measuring method and apparatus consisting in obtaining a certain number of pairs of images of each wheel as the vehicle is moving towards the measurement position. The apparatus uses two video cameras for each wheel, having their lenses directed towards the measurement position and stably connected to the latter. The video cameras are connected to a processor able to process the images of each wheel viewed by them, so as to determine the spatial position of the rim by examining the circular-structure images and identifying the regions in which the transition between different grey levels is maximum, and use these images to calculate the characteristic set-up angles. It is also possible to detect any wobble of the rim edge, i.e. non-perpendicularity of the wheel plane with respect to the associated axis of rotation.

All these known devices, however, are relatively complex with regard to both their manufacture and their preparation; in particular the principle of detecting and comparing a pair of elliptical images of the same wheel involves the use of two videocameras - or a displaceable videocamera - for each wheel, this complicating the installation and the associated management software and resulting in relatively high costs. On the other hand, despite this complexity, the accuracy of measurement of these known devices is still too low, to the extent that these known devices do not appear to have actually found a practical application - at least hitherto.

The object of the present invention is therefore to propose a measuring system of the contactless type, for detecting the characteristic set-up angles of the wheels of a vehicle, able to overcome these problems and ensure that the measuring operation may be performed easily and rapidly.

More precisely, the primary aim of the invention is to propose a measuring method which, based on the general principles illustrated in DE-A-29 48 573, is able to provide extremely precise information as to the angular orientation of the plane of the wheels with respect to a fixed spatial reference system which is outsidE the vehicle and not fixed thereto and with respect to which the vehicle can therefore be arranged with a variable angular orientation. This aim is achieved by means of Claim 1.

In other words, the invention thus defined differs from the prior art fundamentally for two reasons:

- on the one hand, owing to the fact that the conic equation which corresponds to the profile of the wheel rim is not determined by means of simple - almost random - choice of the number of points of this profile necessary and sufficient for mathematical determination of a conic section, but instead by means of a method - defined briefly below as "repeated approximation" method - which allows a selection and repeated filtering of a redundant number of points, until the conic section which best approximates the true profile is determined;
- on the other hand - at least in a preferred simplified embodiment of the invention - the sole information relating to the profiles of only two opposite wheels of the motor vehicle is used.

The Applicant has in fact established that such a method of repeated approximation - an example of which is the least square fit method, known in mathematics - allows definition of the conic section which corresponds to the

EP 1 281 041 B1

wheel profile with a degree of accuracy sufficient for this conic section to be utilisable for the consequent measurement of the set-up angles of a motor vehicle.

The Applicant has also established that the information obtained on the basis of the preferred simplified embodiment of the invention, without further elements, is already sufficient for determining those set-up angles, such as:

- the total toe-in of a pair of wheels (front or rear), which corresponds to the algebraic sum of the toe-in angles of the individual wheels and which may be determined without any reference to the vehicle, but only from the measurement of the angles which the planes containing the wheels form with respect to each other, or with respect to a fixed reference system however defined; and
- the camber of a wheel, which corresponds to the angle formed by the wheel plane with respect to the horizontal plane on which the vehicle rests and which may be determined in turn without any reference to the vehicle, but only with respect to the fixed reference system, in the case (still considered implicitly valid in measurements performed using the existing contact systems) where the vehicle is resting on the horizontal surface of the workshop.

These measurements are those most frequently used in practice in order to define with sufficient accuracy the set-up of the vehicle. In other words, if the measurement is limited to only the main set-up angles, such as total toe-in and camber, the invention proposes a simplified and inexpensive system based on a measuring method which is in principle much simpler than those proposed by the prior art.

Moreover, an important additional aim of the invention is to propose a measuring method which, without making the installation more complex, nevertheless allows, when desired, also the measurement of all the set-up angles of the vehicle, i.e. is able to provide also information - which is equally very precise - concerning the angular orientation of the plane of the individual wheels and their position with respect to the longitudinal axis of the vehicle. This aim is achieved by means of the characteristic features mentioned in Claim 2.

The Applicant has in fact established that this information and the further determination of the position of the vehicle with respect to the fixed spatial reference system is necessary when it is required to detect:

- the toe-in of each individual wheel separately;
- the steering angles;
- the thrust axis, or the axis obtained as the vectorial sum of the toe-in values of the individual wheels, the characteristic angle of which is defined using the geometric axis of the vehicle as the reference axis;
- the axis of symmetry, i.e. the difference between the toe-in values of the individual wheels; and
- the set-back angle, i.e. the angle formed by the axis which joins the righthand and left-hand wheels with an axis perpendicular to the axis of symmetry of the car;

    i.e. measurements which are necessary in particular during initial testing of a new vehicle in the factory.

Further characteristic features and advantages of the invention will emerge, however, more clearly from the following detailed description of a preferred embodiment, provided purely by way of example, also with reference to the accompanying drawings, in which the sole figure is a plan view diagram of a motor vehicle arranged inside a fixed measuring system.

As shown, in a preferred embodiment, according to the invention, a spatial reference system is used, said system consisting of fixed quadrilateral SF situated outside the vehicle V and not fixed thereto and taking the physical form of four fixed videocameras T1, T2, T3 and T4, i.e. one for each of the wheels R1, R2, R3 and R4; these videocameras are arranged so as to record the respective wheels of the vehicle V in a manner which is not exactly in front of the wheel, but from a certain angle. This arrangement of four videocameras must be regarded as a purely nonlimiting example of the invention since it is certainly possible, in smaller installations and for cost-related reasons, to use an arrangement comprising only two videocameras, to be used in each case in correspondence of the two opposite wheels of the same axle of a motor vehicle.

1) Measurement of the total toe-in and camber

As already mentioned, firstly the total toe-in and the camber are measured, i.e. the sums of the angles $\alpha$, $\alpha'$ (shown on a much larger scale than in reality for the sake of clarity of the drawing) formed by the axes r, r' of the opposite wheels with respect to a vertical plane R-R, passing through the centre of the wheels and therefore transverse, respectively, with respect to the vehicle and with respect to the horizontal plane (to be imagined as coinciding with the plane of the drawing) on which the wheels rest.

The measurement process envisages determining a set of measuring points on the wheel and the angular orientation of the planes of the wheels with respect to the fixed spatial reference system and comprises at least the following main steps:

4

a) each videocamera, located so as to view the respective wheel not frontally, but at a certain angle β, β', as already mentioned, is used to read the profile of the wheel rim; this profile is determined as the locus of the points of maximum difference in luminous contrast, occurring at the transition points from the rim to the tyre. The image recorded by the videocamera is digitalized and converted into a rectangular matrix of intensity values, one for each digitalized point. This matrix of values is equalized, namely multiplied by a special factor automatically calculated in relation to the average luminosity of the image. The purpose of the equalization is to reduce the effect of the variation in the lighting conditions of the object. A suitable mathematical operator (Laplace, Sobel) is applied to the equalized values in order to obtain a new matrix of values, one for each point sampled, where the values represent the gradient of variation in intensity. This gradient has a locally very high value at points which, as mentioned, correspond to the rim-wheel interface. A threshold operator is then used in order to extract from the image, only those points for which the gradient is sufficiently high, and among these points there is certainly the rim-tyre interface. The binary matrix obtained is filtered using an erosion operator, in order to eliminate all the isolated points (noise) and leave only the points belonging to predetermined geometric groups (lines, circles, etc.). In order to improve the image quality and reduce the effect caused by the ambient lighting variable, the vehicle wheel is illuminated with infrared light using a set of emitting diodes, and an infrared filter having spectral characteristics coinciding exactly with the emission spectrum of the infrared diodes is placed in front of the optical system of the videocamera: the artificial ambient lighting is completely filtered and its negative effect on the quality of the measurement is thus eliminated. A small influence caused by the infrared fraction of the solar light which may pass through the filter remains, but normally this influence is not significant in the definition of the measurement. By way of further reduction of the effect of the ambient lighting it is also possible to obtain the image to be processed as the difference between the images detected with the infrared lighting switched on and with the infrared lighting switched off, respectively.

b) Once a bundle of points sufficiently close to a conic line is obtained, the measuring method according to the invention must use the redundancy available in the data in order to be able to compensate for errors and imperfections in the image. The calculation of the reference conic section must namely use the greatest possible amount of information obtained from the image in order to reduce the effect of damage to the rim, imperfect detection of the image, imperfect lighting conditions, etc., and obtain the "best" conic section - i.e. the conic section which best approximates the true profile - using data analysis methods which extract this information, eliminating the imperfections as far as possible. One of the methods which can be used for this purpose is the least square fit method. More precisely, a pair of coordinates ( x, y ) corresponding to the position of the point in the image plane is assigned to each point determined in the preceding operation. The equation conic is identified as follows:

$$a_{11}\, x^2 + 2{*}a_{12}\, x\, y + a_{22}\, y^2 + 2{*}a_{13}\, x + 2{*}a_{23}\, y + a_{33} = 0$$

obtaining the coefficients $a_{11}, a_{12}, a_{22}, a_{13}, a_{23}, a_{33}$ which minimize the sum

$$S\,(a_{11}\, x^2 + 2{*}a_{12}\, x\, y + a_{22}\, y^2 + 2{*}a_{13}\, x + 2{*}a_{23}\, y + a_{33})^2$$

calculated using the coordinates x, y of the points obtained. In practice the system of linear equations is resolved with coefficients

$Sx^4, Sx^3y, Sx^2y^2, Sx^3, Sx^2y, Sx^2$
$Sx^3y, Sx^2y^2, Sxy^3, Sx^2y, Sxy^2, Sxy$
$Sx^2y^2, Sxy^3, Sx^2y, Sy^4, Sxy^2, Sy^2$
$Sx^3, Sx^2y, Sxy^2, Sx^2, Sxy, Sx$
$Sx^2y, Sxy^2, Sy^3, Sxy, Sy^2, Sy$

in relation to the variables $a_{11}, a_{12}, a_{22}, a_{13}, a_{23}, a_{33}$.

c) The points which are furthest from the conic section of first approximation are removed from the initial profile thus obtained, in order to eliminate erroneously inserted points, imperfections in the rim or the like from the calculation. The remaining points are then used to recalculate the conic section which best approximates them.

d) From the equation of this conic section, the spatial position of the videocamera being known, it is possible to obtain two angles which define - with respect to the reference system - the orientation of a bundle of parallel planes which intersect, in the form of a set of circles, the cone obtained, projecting into space the conic section "viewed" by the videocamera. The basic theory is that the tyre-rim edge may be always represented by a circle when viewed perpendicularly with respect to the wheel plane. In fact, the tyre-rim projects onto the videocamera an image obtained by sectioning the cone of straight lines passing through the tyre-rim and through the centre of the optical system with the plane of the videocamera. This image is a conic section. A point x', y' in the plane of the videocamera corresponds to each point of coordinates x,y in the plane of the image. Let us consider a reference system fixed to the videocamera, in which the plane of the videocamera is the plane z=-z1, the z axis emerges from the plane of the videocamera towards the wheel, the y axis is the vertical axis and points downwards and finally the origin of this reference system coincides with the centre of the optical system positioned opposite the videocamera.

In order to measure the toe-in: the reference system is displaced so that the new origin is the centre of the tyre-rim which, for the sake of simplicity of calculation, is considered on the z axis at a distance z0 from the videocamera lens: this transformation is represented, in homogeneous coordinates, by the matrix:

$$\begin{matrix} 1 & 0 & 0 & 0 \\ 0 & 1 & 0 & 0 \\ 0 & 0 & 1 & -z0 \\ 0 & 0 & 0 & 1 \end{matrix}$$

The toe-in angle coincides with the angle through which the displaced reference system must be rotated about the y (vertical) axis so that the associated x axis lies in the wheel plane.

$$\begin{matrix} \cos(cv) & 0 & \sin(cv) & 0 \\ 0 & 1 & 0 & 0 \\ -\sin(cv) & 0 & \cos(cv) & 0 \\ 0 & 0 & 0 & 1 \end{matrix}$$

Finally, by means of a further rotation about the x axis, the x and y axes of the new reference system lie in the wheel plane

$$\begin{matrix} 1 & 0 & 0 & 0 \\ 0 & \cos(ccv) & \sin(ccv) & 0 \\ 0 & -\sin(ccv) & \cos(ccv) & 0 \\ 0 & 0 & 0 & 1 \end{matrix}$$

In this reference system the tyre-rim has the equation: $x^2+y^2-(k*z0)^2=0$ which, in the reference system fixed to the videocamera, is equal to

$$x^2 * COS(ccv)^2 * k^2 * z0^2 * COS(cv)^2 - *z0^2(k^2-1))$$

$$-2*x*y*z0^2*(k^2-1)*SIN(ccv)*COS(ccv)*SIN(cv)$$

$$+y^2*(COS(ccv)^2*(z0^2*COS(cv)^2+z0^2*(k^2-1))-k^2*z0^2+z0^2$$

$$+2*x*zl*k^2*z0^2*SIN(cv)*COS(cv)*COS(ccv)^2$$

$$+2*y*z1*k^2*z0^2*COS(cv)*SIN(ccv)*COS(ccv)$$

$$-z1^2*COS(cv)^2*COS(ccv)^2 = 0$$

By comparison with the general form of a conic section in the plane:

$$a_{11} x^2 + 2{*}a_{12}\, x\, y + a_{22}\, y^2 + 2{*}a_{13}\, x + 2{*}a_{23}\, y + a_{33} = 0$$

it is possible to obtain cv, cvv, zl. In order simplify the calculation operation, it is convenient to convert firstly the generic conic section into a simplified canonical form:

$$b_{11} x^2 + b_{22}\, y^2 + b_{33} = 0$$

by performing substitution of variables

$$x = X\, COS(rr) + Y\, SIN(rr) + YO$$

$$y = -Y\, SIN(rr) + X\, COS(rr) + XO$$

where

$$rr = tg^{-1} (2\, a_{12}/ (a_{11} - a_{22}))/2$$

$$XO = (a_{12}\, a_{23} - a_{13}\, a_{22})/(a_{11}\, a_{22} - a_{12}^2)$$

$$YO = (a_{12}\, a_{13} - a_{13}\, a_{11})/(a_{11}\, a_{22} - a_{12}^2)$$

therefore

$$b_{11} = (a_{11} - a_{22}){*}COS(rr)^2 - 2{*}a_{12}{*}SIN(rr){*}COS(rr) + a_{22}$$

$$b_{22} = (a_{22} - a_{11}){*}COS(rr)^2 + 2{*}a_{12}{*}SIN(rr){*}COS(rr) + a_{11}$$

in the new reference system.

In particular

$$rr = tan^{-1} (SIN(cv){*}COS(CCV)/SIN(CCV))$$

which depends only on cv, cvv and not on the spatial position of the wheel. The coordinates XO, YO are not used, depending on the relative position of videocamera and wheel, not being relevant for the calculation of the toe-in values.

The coefficients of the canonical conic section are

$$b_{11} = z0^2{*}COS(cv)2{*}cos(ccv)^2$$

$$b_{22} = k^2{*}z0^2{*}COS(cv)^2{*}COS(CCV)^2 - z0^2{*}(k^2 - 1)$$

$$b_{33} = -k^2{*}z0^2{*}z1^2{*}COS(cv)^2{*}COS(ccv)^2/$$

$$(k^2{*}COS(cv)^2{*}COS(ccv)^2 - k^2 + 1)$$

The ratio $b_{22}/b_{11}$ does not depend on z0 (distance between videocamera/wheel), but only on z1 (focal length of videocamera) and on k (which defines the apparent radius, i.e. the radius of the wheel in relation to the distance).

In fact:

$$b_{22}/b_{11} = (1-k^2)/(COS(ccv)^2 COS(cv)^2)+k^2.$$

Moreover, $b_{33}*b_{22}/b_{11} = -k^2*z0^2*z1^2$, once z1 is known, indicates the value of k*z0 and defines completely the set of circles, the projection of which onto the plane of the videocamera is the conic section determined. Using $b_{11}/b_{33}$, $b_{22}/b_{33}$ and rr, there are three equations in three unknown values ( k*z0, cv, .ccv ) which identify a bundle of parallel planes in which the rim may lie.

The angles thus obtained are adequate for determining total toe-in and camber.

2) Measurement of the toe-in of the individual wheels and other set-up angles of the motor vehicle

As already briefly mentioned, the measurements obtained as described in the previous section are not sufficient for calculation of the toe-in values of the individual wheels, the thrust angle and the set-back angle, for which it is further required to determine the position of the vehicle with respect to the spatial system comprising a fixed reference quadrilateral. For this purpose the spatial position of the wheel and the vehicle are therefore determined.

In order to determine this position, distance measurements are required so as to identify precisely, on each of the wheels, a point which has a precise correlation with that plane - among the bundle of planes determined in the previous section - which contains the tyre-rim profile, as identified with the videocamera.

According to the present invention, the system for determining this distance consists in using the image of the wheel: more precisely, the apparent radius of the rim is obtained geometrically from the conic equation which represents the tyre-rim profile in the plane of the videocamera. From the analysis carried out in the previous section, the coefficient k*z0 is obtained, said coefficient identifying the apparent radius of the rim. If it is considered that the four wheels of the vehicle must have the same identical rim, it is obvious that their ideal radius - except for the manufacturing tolerances of the said rims - is the same; however, the real radius and the apparent radius are associated by the relation:

$$ra/rr = dlc/df$$

where ra = apparent radius, rr = real radius, dlc = distance of the videocamera lens from the wheel rim, df = focal length of the videocamera lens., If we now assume that

$$ra = rr$$

and taking into account that df is known, it is possible, from the apparent radius measured for each wheel, to obtain the distance dlc, namely the distance from the videocamera, or the fixed reference quadrilateral, of the plane which contains the wheel rim. In order to verify the assumption regarding the value to be assigned to the apparent radius it is possible (but not necessary for correct measurement) to compare the real radius value with the true value, which is available for example in a data base relating to the wheel type used for the vehicle being tested.

The manufacturing tolerances of the rims influence the calculation precision of the distances and this in turn influences the calculation of the thrust axis and the set-back value; if the distance between videocamera and rim is for example 500 mm and the radius of the rims is 200 mm, every mm of tolerance in this radius corresponds to an error of 2.5 mm in the distance measurement. For a vehicle with a wheel base of 2000 mm, this error is equivalent to a an angular error of 5° in the measurement of the thrust axis and the set-back value. Such an error is certainly acceptable for measurements performed during normal checking of motor vehicles.

3) Calibration

The system envisages a calibration procedure which consists of two separate and successive steps

    1. Correction of the non-linearity of the optical system: in order to ensure the required measuring precision, the ever-present distortion caused by the optical system must be compensated for. This distortion, if it is not corrected, produces a deformation of the conic section and therefore a measuring error. In order to correct the distortion, the image of a grid is recorded and the position of the points on the grid is determined: knowing the position which these points should theoretically have, it is possible to correct the distortion thereof.

2. Correction of the position of the videocameras in the measuring position: in order to be able to carry out correct measurements, the relative position of the various videocameras in the fixed spatial reference system must be known. This calibration is performed by measuring the characteristic angles of a specially designed calibration apparatus: these characteristic angles are then subtracted from the angles measured.

**Claims**

1. Method for checking the set-up of the suspension of motor vehicles, for measuring at least the total toe-in and camber angles of the wheels, of the type in which at least two detecting videocameras (T1-T4) in predetermined fixed positions (SF) are used, said videocameras being able to define a fixed spatial reference system (SF), these videocameras being associated with at least two respective opposite wheels (R1, R4) of a same axle of the vehicle, **characterized in that** it comprises the steps of:

    identifying, for each wheel, the profile of a rim associated with the wheel and projected onto the optical sensor plane of the respective videocamera, as the locus of the points of greatest variation in luminous intensity;
- calculating mathematically, using a repeated approximation method, the conic section which best approximates the profile thus obtained;
- calculating, from the equation of this conic section and from the known coordinates of the position of the videocamera in the fixed spatial reference system (SF), the two angles which define - with respect to a vertical longitudinal plane and with respect to a horizontal plane of the fixed reference system - the orientation of a bundle of parallel planes which intersect, in the form of a set of circles, the cone obtained, projecting into space the conic section "viewed" by the videocamera, these angles representing the total toe-in and the camber of the wheel, respectively.

2. Method for checking the set-up of the suspension of motor vehicles according to Claim 1, for measuring at least the toe-in angles of the individual wheels as well as other set-up angles of the vehicle, **characterized in that** it comprises moreover the steps of:

-   determining the distance of each individual wheel from the respective videocamera by means of a comparison of the individual apparent radiuses of the different wheels detected, based on the assumption that the respective rims all have the same real radius;
-   defining, on the basis of the positions of the videocameras in the fixed spatial reference system and their distance from the individual wheels, also the position of the vehicle and its main longitudinal axis iri said space; and
-   calculating the toe-in angle of the individual wheels and the other set-up angles, placing said total toe-in angle in relationship with a vertical plane passing through said longitudinal axis.

3. Method for checking the set-up of the suspension of motor vehicles according to Claim 1, **characterized in that** said repeated approximation method consists in the least square fit mathematical method.

4. Method according to Claims 1, 2 or 3, **characterized in that** said spatial reference system consists of a fixed quadrilateral, taking the physical form of the fixed position of four videocameras, one being located opposite each wheel of a four-wheel vehicle.

5. Method according to Claim 4, **characterized in that** each of said videocameras is oriented so as to view the respective wheel at an oblique angle.

6. Method according to Claims 1, 2 or 3, **characterized in that** said locus of the points of greatest variation in luminous intensity is defined at the transition from the wheel rim to the tyre.

7. Method according to Claim 6, **characterized in that** the image recorded by each videocamera is digitalized and converted into a first rectangular matrix of intensity values, one for each digitalized point.

8. Method according to Claim 7, **characterized in that** said matrix of values is equalized, in order to reduce the effect of variation in the lighting conditions of the object.

**9.** Method according to Claim 8, **characterized in that** a mathematical operator (Laplace, Sobel) is applied to the equalized values of said matrix so as to obtain a new matrix of values representing the gradient of variation in intensity.

**10.** Method according to Claim 9, **characterized in that** a threshold operator is used in order to extract from the image recorded by the videocamera only those gradient values which exceed a predefined threshold in order to obtain a second binary reference matrix.

**11.** Method according to Claim 10, **characterized in that** said second reference matrix is filtered using an erosion operator so as to eliminate the isolated points and leave only those belonging to defined geometric groups (lines, circles, conic section, etc.).

**12.** Method according to Claim 6, **characterized in that** each wheel is illuminated with infrared light, and an infrared filter having spectral characteristics coinciding with said infrared light is placed in front of the optical system of each respective videocamera.

**13.** Method according to Claim 12, **characterized in that** the image to be processed is obtained as the difference between a first image detected with the infrared lighting switched on and a second image detected with the infrared lighting switched off.

**14.** Method according to Claim 1, 2 or 3, **characterized in that** a pair of coordinates ( x, y ) corresponding to the position of the point in the image plane is assigned to each point and the equation conic is identified as follows:

$$a_{11} x^2 + 2{*}a_{12} \, x \, y + a_{22} \, y^2 + 2{*}a_{13} \, x + 2{*}a_{23} \, y + a_{33} = 0$$

determining the coefficients $a_{11}, a_{12}, a_{22}, a_{13}, a_{23}, a_{33}$ which minimize the sum S $(a_{11} \, x^2 + 2{*}a_{12} \, x \, y + a_{22} \, y^2 + 2{*}a_{13} \, x + 2{*}a_{23} \, y + a_{33})^2$ calculated using the coordinates x, y of the points obtained.

**15.** Method according to Claim 14, **characterized in that**, from the initial conic section profile thus obtained, the points which are furthest from the conic section of first approximation are removed in order to eliminate from the calculation erroneously inserted points, imperfections in the rim or the like, and the remaining points are used to recalculate the conic section which best approximates them.

**16.** Method according to Claims 1, 2 or 3, **characterized in that** the determination of the distance of each individual wheel from the respective videocamera, by means of comparison between the apparent radius of the different wheels detected, is performed on the basis of the relation:

$$ra/rr = dlc/df$$

where ra = apparent radius, rr = real radius, dlc = distance of the videocamera lens from the wheel rim and df = focal length of the videocamera lens, on the assumption that:

$$ra = rr$$

and taking into account the fact that df is known.

**17.** Method according to Claims 16, **characterized in that** the real radius (rr) is moreover compared to the true value of the radius of the rim, available in a data base.

**Patentansprüche**

**1.** Verfahren zum Überprüfen der Einstellung der Aufhängung von Kraftfahrzeugen, um zumindest die gesamten Vorspur- und Sturzwinkel der Räder zu messen, der Art, bei der zumindest zwei Videokameras (T1 bis T4) zur Erfassung in vorbestimmten festgelegten Positionen verwendet werden, wobei die genannten Videokameras in der Lage sind; ein feststehendes räumliches Bezugssystem (SF) festzulegen, wobei diese Videokameras zumindest zwei jeweils einander gegenüberliegenden Rädern (R1, R4) von ein und derselben Achse des Fahrzeugs zugeordnet sind, **dadurch gekennzeichnet, daß** das Verfahren folgende Schritte umfaßt;

- Identifizieren, für jedes einzelne Rad, des Profils einer Felge, die dem Rad zugeordnet ist, und die auf die optische Erfassungsebene der jeweiligen Videokamera projiziert wird, als der Ort der Punkte mit der größten Veränderung der Lichtintensität;

- mathematisches Berechnen des Kegelschnitts, der das auf diese Weise erhaltene Profil am besten annähert, wobei ein wiederholtes Näherungsverfahren verwendet wird;

- Berechnen, ausgehend von der Gleichung dieses Kegelschnüts und von den bekannten Koordinaten der Position der Videokamera in dem festgelegten räumlichen Bezugssystem (SF), der beiden Winkel, die in Bezug auf eine vertikale Längsebene und in Bezug auf eine horizontale Ebene des feststehenden Bezugsystems die Orientierung eines Bündels von parallelen Ebenen definieren, die in Form einer Menge von Kreisen den erhaltenen Kegel schneiden, wobei der von der Videokamera "gesehene" Kegelschnitt in den Raum projiziert wird und diese Winkel die gesamte Vorspur und den Sturz des Rades repräsentieren.

2. Verfahren zum Überprüfen der Einstellung der Aufhängung von Kraftfahrzeugen nach Anspruch 1, zum Messen von (zumindest) den Vorspurwinkeln der einzelnen Räder und auch von weiteren Einstellungswinkeln des Fahrzeugs, **dadurch gekennzeichnet, daß** das Verfahren darüber hinaus die folgenden Schritte umfaßt:

- Bestimmen des Abstandes eines jeden einzelnen Rades von der jeweiligen Videokamera mit Hilfe eines Vergleichs des individuellen scheinbaren Radius der unterschiedlichen erfaßten Räder, ausgehend von der Annahme, daß die jeweiligen Felgen alle den gleichen realen Radius aufweisen;

- Festlegen, auf der Basis der Positionen der Videokameras in dem feststehenden räumlichen Bezugssystem und ihres Abstands von den einzelnen Rädern, auch der Position des Fahrzeugs und seiner Hauptlängsachse in dem genannten Raum, und

- Berechnen des Vorspurwinkels der einzelnen Räder und der weiteren Einstellungswinkel, wobei der genannte gesamte Vorspurwinkel in Bezug zu einer vertikalen Ebene gesetzt wird, die durch die genannte Längsachse geht

3. Verfahren zum Überprüfen der Einstellung der Aufhängung von Kraftfahrzeugen nach Anspruch 1, **dadurch gekennzeichnet, daß** das genannte wiederholte Näherungsverfahren aus dem mathematischen Verfahren der Anpassung durch kleinste Quadrate besteht.

4. Verfahren nach Anspruch 1, 2 oder 3, **dadurch gekennzeichnet, daß** das genannte räumliche Bezugssystem aus einem feststehenden Viereck besteht, wobei die physikalische Form der feststehenden Position von vier Videokameras genommen wird, wobei sich eine jeweils gegenüber von einem Rad eines Fahrzeugs mit vier Rädern befindet.

5. Verfahren nach Anspruch 4, **dadurch gekennzeichnet, daß** jede der genannten Videokameras so orientiert ist, daß sie das entsprechende Rad unter einem schrägen Winkel sieht.

6. Verfahren nach Anspruch 1, 2 oder 3, **dadurch gekennzeichnet, daß** der genannte Ort der Punkte mit den größten Veränderungen in der Lichtstärke als der Übergang der Radfelge zum Reifen definiert wird.

7. Verfahren nach Anspruch 6, **dadurch gekennzeichnet, daß** das Bild, das von jeder einzelnen Videokamera aufgezeichnet wird, digitalisiert und in eine erste rechteckige Matrix von Intensitätswerten konvertiert wird, einer für jeden digitalisierten Punkt.

8. Verfahren nach Anspruch 7, **dadurch gekennzeichnet, daß** die genannte Matrix von Werten ausgeglichen wird, um den Effekt einer Variation in den Beleuchtungsbedingungen des Objekts zu reduzieren.

9. Verfahren nach Anspruch 8, **dadurch gekennzeichnet, daß** ein mathematischer Operator (Laplace, Sobel) auf die ausgeglichenen Werte der genannten Matrix angewendet wird, um eine neue Matrix von Werten zu erhalten, die den Gradienten der Veränderung in der Intensität repräsentieren.

**10.** Verfahren nach Anspruch 9, **dadurch gekennzeichnet, daß** ein Schwellenoperator verwendet wird, um aus dem Bild, das von der Videokamera aufgezeichnet worden ist, lediglich solche Gradientenwerte zu extrahieren, die eine vorbestimmte Schwelle überschreiten, um eine zweite binäre Bezugsmatrix zu erhalten,

**11.** Verfahren nach Anspruch 10, **dadurch gekennzeichnet, daß** die genannte zweite Bezugsmatrix gefiltert wird, wobei ein Erosionsoperator verwendet wird, um die isolierten punkte zu eliminieren und um lediglich solche Punkte beizubehalten, die zu definierten geometrischen Gruppen gehören (Linien, Kreise, Kegelschnitt usw.).

**12.** Verfahren nach Anspruch 6, **dadurch gekennzeichnet, daß** jedes Rad mit infrarotem Licht beleuchtet wird, und daß ein Infrarotfilter vor dem optischen System einer jeden entsprechenden Videokamera plaziert wird, der spektrale Eigenschaften aufweist, die mit dem infraroten Licht übereinstimmen.

**13.** Verfahren nach Anspruch 12, **dadurch gekennzeichnet, daß** das Bild, das zu verarbeiten ist, als Unterschied zwischen einem ersten Bild, das erfaßt wird, wenn das infrarote Licht eingeschaltet ist, und einem zweiten Bild, das erfaßt wird, wenn das infiarote Licht ausgeschaltet ist, erhalten wird.

**14.** Verfahren nach Anspruch 1, 2 oder 3, **dadurch gekennzeichnet, daß** ein Paar von Koordinaten (x, y), die der Position des Punkts in der Bildebene entsprechen, einem jedem Punkt zugeordnet werden, und daß die Gleichung des Kegelschnitts wie folgt lautet:

$$a_{11} x^2 + 2^* a_{12} x y + a_{22} y^2 + 2^* a_{13} x + 2^* a_{23} y + a_{33} = O$$

wobei die Koeffizienten $a_{11}$, $a_{12}$, $a_{22}$, $a_{13}$, $a_{23}$, $a_{33}$, die die Summe S $(a_{11} x^2 + 2 ^* a_{12} x y + a_{22} y^2 + 2 ^* a_{13} x + 2 ^* a_{23} y + a_{33})^2$ minimieren, berechnet werden, wobei die Koordinaten x, y der erhaltenen Punkte verwendet werden.

**15.** Verfahren nach Anspruch 14, **dadurch gekennzeichnet, daß** ausgehend von dem anfänglichen Kegelschnittprofil, das auf diese Weise erhalten worden ist, die Punkte, die sich am weitesten entfernt von dem Kegelschtnitt der ersten Näherung befinden, entfernt werden, um fehlerhaft eingefügte Punkte, Fehler der Felge oder ähnliches aus der Berechnung zu eliminieren, und daß die verbleibenden Punkte dazu verwendet werden, um den Kegelschnitt erneut zu berechnen, der diese am besten approximiert.

**16.** Verfahren nach Anspruch 1, 2 oder 3, **dadurch gekennzeichnet, daß** die Bestimmung des Abstands eines jeden einzelnen Rades von der entsprechenden Videokamera mit Hilfe eines Vergleichs zwischen dem scheinbaren Radius der unterschiedlichen erfaßten Räder auf der Basis der folgenden Beziehung ausgeführt wird:

$$ra/rr = dlc/df$$

wobei ra = scheinbarer Radius, rr = tatsächlicher Radius, dlc = Abstand des Objektivs der Videokamera von der Felge des Rades und df = Brennweite des Objektives der Videokamera, ausgehend von der Annahme, daß ra = rr, und unter Berücksichtigung der Tatsache, daß df bekannt ist.

**17.** Verfahren nach Anspruch 16, **dadurch gekennzeichnet, daß** der tatsächliche Radius (rr) darüber hinaus mit dem tatsächlichen Wert des Radius der Felge verglichen wird, der in einer Datenbank verfügbar ist.

**Revendications**

**1.** Procédé pour vérifier le réglage de la suspension de véhicules à moteur, pour mesurer au moins les angles de pincement total et de carrossage des roues, du type dans lequel au moins deux caméras vidéo (T1-T4) de détection dans des positions fixes et prédéterminées sont utilisées, lesdites caméras vidéo étant capables de définir un système de référence spatiale fixe (SF), ces caméras vidéo étant associées à au moins deux roues opposées respectives (R1, R4) d'un même essieu du véhicule, **caractérisé en ce qu'**il comprend les étapes qui consistent :

- à identifier, pour chaque roue le profil d'une jante associée à la roue et projeté sur le plan du capteur optique de la caméra vidéo respective, en tant que lieu géométrique des points de plus grande variation de l'intensité lumineuse ;

- à calculer mathématiquement, en utilisant une méthode d'approximation répétée, la section conique qui donne la meilleure approximation du profil ainsi obtenu ;
- à calculer, à partir de l'équation de cette section conique et à partir des coordonnées connues de la position de la caméra vidéo dans le système de référence spatiale fixe (SF), les deux angles qui définissent - par rapport à un plan longitudinal vertical et par rapport à un plan horizontal du système de référence fixe - l'orientation d'un faisceau de plans parallèles qui intersectent, sous la forme d'un ensemble de cercles, le cône obtenu, projetant dans l'espace la section conique "vue" par la caméra vidéo, ces angles représentant le pincement total et le carrossage de la roue, respectivement.

2. Procédé pour vérifier le réglage de la suspension de véhicules à moteur selon la revendication 1, pour mesurer au moins les angles de pincement des roues individuelles ainsi que d'autres angles de réglage du véhicule, **caractérisé en ce qu'**il comprend en outre les étapes qui consistent :

- à déterminer la distance de chaque roue individuelle par rapport à la caméra vidéo respective au moyen d'une comparaison des rayons apparents individuels des différentes roues détectées, sur la base de la supposition que les jantes respectives ont toutes le même rayon réel ;
- à définir, sur la base des positions des caméras vidéo dans le système de référence spatiale fixe et de leur distance par rapport aux roues individuelles, la position aussi du véhicule et son axe longitudinal principal dans ledit espace ; et
- à calculer l'angle de pincement des roues individuelles et les autres angles de réglage, plaçant ledit angle de pincement total en relation avec un plan vertical passant par ledit axe longitudinal.

3. Procédé pour vérifier le réglage de la suspension de véhicules à moteur selon la revendication 1, **caractérisé en ce que** ladite méthode d'approximation répétée consiste en la méthode mathématique des moindres carrés.

4. Procédé selon la revendication 1, 2 ou 3, **caractérisé en ce que** ledit système de référence spatiale consiste en un quadrilatère fixe, prenant la forme physique de la position fixe de quatre caméras vidéo, l'une étant placée en face de chaque roue d'un véhicule à quatre roues.

5. Procédé selon la revendication 4, **caractérisé en ce que** chacune desdites caméras vidéo est orientée de façon à viser la roue respective sous un angle oblique.

6. Procédé selon la revendication 1, 2 ou 3, **caractérisé en ce que** ledit lieu géométrique des points de plus grande variation de l'intensité lucnineuse est défini à la transition de la jante de la roue au pneumatique.

7. Procédé selon la revendication 6, **caractérisé en ce que** l'image enregistrée par chaque caméra vidéo est numérisée et convertie en une première matrice rectangulaire de valeurs d'intensité, une pour chaque point numérisé.

8. Procédé selon la revendication 7, **caractérisé en ce que** ladite matrice de valeurs est égalisée, afin de réduire l'effet d'une variation des conditions d'éclairement de l'objet.

9. Procédé selon la revendication 8, **caractérisé en ce qu'**un opérateur mathématique (Laplace, Sobel) est appliqué aux valeurs égalisées de ladite matrice afin d'obtenir une nouvelle matrice de valeurs représentant le gradient de variation de l'intensité.

10. Procédé selon la revendication 9, **caractérisé en ce qu'**un opérateur à seuil est utilisé pour extraire de l'image enregistrée par la caméra vidéo uniquement les valeurs de gradient qui dépassent un seuil prédéfini afin d'obtenir une seconde matrice de référence binaire.

11. Procédé selon la revendication 10, **caractérisé en ce que** ladite seconde matrice de référence est filtrée en utilisant un opérateur d'érosion afin d'éliminer les points isolés et de ne laisser que ceux appartenant à des groupes géométriques définis (lignes, cercles, section conique, etc.).

12. Procédé selon la revendication 6, **caractérisé en ce que** chaque roue est éclairée avec une lumière infrarouge, et un filtre à infrarouges ayant des caractéristiques spectrales coincidant avec ladite lumière infrarouge est placé en face du système optique de chaque caméra vidéo respective.

**13.** Procédé selon la revendication 12, **caractérisé en ce que** l'image devant être traitée est obtenue en tant que différence entre une première image détectée avec l'éclairage infrarouge appliqué et une seconde image détectée avec l'éclairage infrarouge coupé.

**14.** Procédé selon la revendication 1, 2 ou 3, **caractérisé en ce qu'**une paire de coordonnées (x, y) correspondant à la position du point dans le plan image est attribuée à chaque point et l'équation conique est identifiée de la manière suivante :

$$a_{11}\ x^2 + 2{*}a_{12}\ x\ y + a_{22}\ y^2 + 2{*}a_{13}\ x + 2{*}a_{23}\ y + a_{33} = 0$$

déterminant les coefficients $a_{11}$, $a_{12}$, $a_{22}$, $a_{13}$, $a_{23}$, $a_{33}$, qui minimisent la somme $S(a_{11}\ x^2 + 2{*}a_{12}\ x\ y + a_{22}\ y^2 + 2{*}a_{13}\ x + 2{*}a_{23}\ y + a_{33})^2$ calculée en utilisant les coordonnées x, y des points obtenus.

**15.** Procédé selon la revendication 14, **caractérisé en ce que**, à partir du profil de section conique initial ainsi obtenu, les points qui sont les plus éloignés de la section conique de première approximation sont enlevés afin d'éliminer du calcul des points insérés par erreur, des imperfections dans la jante ou analogues, et les points restants sont utilisés pour recalculer la section conique qui en donne la meilleure approximation.

**16.** Procédé selon la revendication 1, 2 ou 3, **caractérisé en ce que** la détermination de la distance de chaque roue individuelle par rapport à la caméra vidéo respective, au moyen d'une comparaison entre le rayon apparent des différentes roues détectées, est exécutée sur la base de la relation :

ra/rr = dlc/df

où ra = rayon apparent, rr = rayon réel, dlc = distance de l'objectif de la caméra vidéo par rapport à la jante de la roue et df = longueur focale de l'objectif de la caméra vidéo, en supposant que :

ra = rr

et en tenant compte du fait que df est connue.

**17.** Procédé selon la revendication 16, **caractérisé en ce que** le rayon réel (rr) est de plus comparé à la valeur réelle du rayon de la jante, disponible dans une base de données.